(19) Europäisches Patentamt
European Patent Office
Office européen des brevets

(11) **EP 2 592 396 A1**

(12) **DEMANDE DE BREVET EUROPEEN**

(43) Date de publication:
**15.05.2013 Bulletin 2013/20**

(51) Int Cl.:
***G01F 23/24*** *(2006.01)*

(21) Numéro de dépôt: **12191841.1**

(22) Date de dépôt: **08.11.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **08.11.2011 FR 1160142**

(71) Demandeurs:
  • **Morineau, Jacques**
    **49125 Tierce (FR)**
  • **Simmony, Marc**
    **92190 Meudon (FR)**

• **Simmony, Herve**
  **78100 Saint-Germain-en-Laye (FR)**
• **Simmony, Christine**
  **92190 Meudon (FR)**

(72) Inventeurs:
  • **Morineau, Jacques**
    **49125 Tierce (FR)**
  • **Simmony, Roger**
    **92190 Meudon (FR)**

(74) Mandataire: **Machtalère, Georges et al**
    **Cabinet Jolly**
    **38, avenue Hoche**
    **75008 Paris (FR)**

(54) **Procédé de mesure d'une hauteur d'un fluide contenu à l'intérieur d'un réservoir**

(57) Un procédé de mesure d'une hauteur d'un fluide (2) contenu à l'intérieur d'un réservoir (1), comprenant une étape (a) de réception de deux valeurs de mesures obtenues au moyen de deux sondes (S1, S2) respectives de longueurs différentes ($h_1$, $h_2$), chaque sonde étant disposée à l'intérieur du réservoir de façon à définir une partie immergée dans le fluide et une partie émergée, les proportions relatives ($x_1$, $x_2$) entre la longueur de la partie immergée et la longueur de la partie émergée étant différente d'une sonde à l'autre.

FIG. 1

EP 2 592 396 A1

**Description**

**Domaine technique de l'invention.**

L'invention relève du domaine des mesures de niveau d'un fluide contenu à l'intérieur d'un réservoir. Elle a pour objet un procédé de mesure d'une hauteur d'un tel fluide. Elle a aussi pour objet un dispositif de mesure de ladite hauteur.

Par fluide on entend ici les liquides et les poudres pulvérulentes. L'invention peut ainsi être appliquée à la mesure d'un niveau de GPL, de fuel, de maïs, de granulé, de lessive en poudres, ou autre.

**Etat de la technique.**

Le document FR 2,847,340 (MORINEAU Jacques et SIMONNY Roger) décrit un procédé de mesure d'un niveau d'un liquide contenu à l'intérieur d'un réservoir. Le procédé est basé sur la mesure des caractéristiques d'une ligne haute fréquence, coaxiale ou non, notamment l'impédance, à travers son module, son argument ou bien sa partie réelle ou imaginaire, qui varient en fonction de ses dimensions physiques et des caractéristiques de son diélectrique. Le procédé consiste notamment à effectuer sur un circuit électrique, alimenté en courant alternatif haute fréquence, une comparaison entre l'impédance d'une sonde à ligne coaxiale ou non et une résistance de référence, au moyen d'un pont de mesure résistif. La sonde immergée dans le réservoir de fluide dont on souhaite déterminer la hauteur constitue un bras de mesure et la dite résistance de référence constitue un bras opposé du pont de mesure. Le signal de comparaison résulte de la mesure alternative du signal sur chacun des bras du pont, le signal de comparaison étant traité en vue d'obtenir le calcul de la hauteur du liquide en fonction de sa permittivité, de la longueur de la sonde et de la fréquence d'alimentation du circuit.

Un problème posé par l'utilisation d'une telle méthode réside dans le fait que la hauteur calculée est fonction de la permittivité du liquide qui n'est parfois connue qu'approximativement, notamment dans le cas fréquent où le liquide est issu du raffinage et/ou est un mélange de différents composés, tels que du butane et du propane par exemple.

**Objet de l'invention.**

Il existe un besoin pour un procédé de mesure de hauteur d'un fluide à partir d'une mesure d'une propriété d'une ligne électrique, plus précis.

Il est proposé un procédé de mesure d'une hauteur d'un fluide contenu à l'intérieur d'un réservoir, comprenant une étape (a) de réception de deux valeurs mesurées au moyen de deux sondes respectives présentant au moins une caractéristique physique différente d'une sonde à l'autre, chaque sonde étant disposée à l'intérieur du réservoir de façon à définir une partie immergée dans le fluide et une partie émergée.

Avantageusement, chaque valeur de mesure reçue peut être relative à une propriété d'une ligne électrique formée par la sonde correspondant à ladite valeur de mesure et son environnement.

Avantageusement, le procédé peut comprendre, en outre, une étape de traitement pour estimer une valeur de hauteur de fluide à partir des deux valeurs de mesures reçues à l'étape (a).

Ainsi, l'utilisation de deux sondes avec des caractéristique(s) physique(s) différente(s) peut permettre de s'affranchir de l'erreur liée à l'estimation imparfaite de la permittivité du fluide.

Il est en outre proposé un procédé de mesure d'une hauteur d'un fluide contenu à l'intérieur d'un réservoir, comprenant

- prévoir deux sondes disposées dans le réservoir de sorte que pour au moins une hauteur de fluide, chaque sonde définisse une partie immergée dans le fluide et une partie émergée, et de sorte que, chaque sonde formant vis-à-vis de son environnement une ligne électrique correspondante, lesdites lignes électriques présentent au moins une caractéristique physique différente d'une ligne électrique à l'autre,
- une étape (a) de réception de deux valeurs de mesures obtenues au moyen desdites sondes respectives, chaque valeur de mesure reçue étant relative à une propriété de la ligne électrique correspondante, et
- une étape de traitement pour estimer une valeur de hauteur de fluide à partir des deux valeurs de mesures reçues à l'étape (a).

Par « caractéristique physique d'une sonde/d'une ligne électrique », on entend une caractéristique macroscopique, c'est-à-dire relative à l'ensemble de la sonde/de la ligne électrique, par exemple des dimensions, une densité, un positionnement de sonde, ou autre.

Avantageusement, la ou les caractéristique(s) physique(s) différente(s) peuvent être des dimensions, par exemple :

- les dimensions d'une section de jauge, par exemple le diamètre de section de jauge,
- formes des sondes,
- les longueurs des jauges, et/ou autre.

Les caractéristiques physiques des lignes électriques peuvent être différentes du fait du positionnement des sondes. Par exemple, on peut prévoir des sondes identiques avec une sonde plus enfoncée dans le réservoir que l'autre ou plus proche d'un blindage électromagnétique que l'autre, et/ou autre : les lignes électriques correspondant à ces sondes ainsi positionnées différemment peuvent présenter des caractéristiques physiques, par exemple une impédance, différentes.

Les sondes peuvent avoir les mêmes dimensions, et différer, par exemple, de part leur matériau, la présence ou non d'un gainage, etc. En fait, l'invention n'est limitée par la nature de la (ou les) caractéristique(s) physique(s) différentiant les deux lignes électriques que dans la mesure où cette (ou ces) caractéristiques influent sur les valeurs de mesure correspondantes.

Dans le cas où les jauges différent de part leurs longueurs, les proportions relatives entre la longueur de la partie immergée et la longueur de la partie émergée peuvent être différentes d'une sonde à l'autre.

Avantageusement, au moins une, et de préférence chaque, valeur de mesure reçue peut être relative à une propriété d'une ligne électrique formée par la sonde correspondant à cette valeur de mesure et son environnement. Le contact entre au moins une partie de la sonde avec le fluide a en effet une influence sur la ligne électrique correspondante, et donc sur cette propriété, par exemple une impédance, un écart de temps entre onde incidente et onde réfléchie, un déphasage ou une variation d'écart de phase ou d'une impulsion, ou autre forme de signal.

Les longueurs relatives des parties immergées et émergées de la sonde ont une influence sur les propriétés de la ligne électrique correspondante.

La valeur relative à une propriété de la ligne électrique peut être représentative de cette propriété, par exemple une valeur d'écart de temps, ou bien encore permettre de calculer une valeur représentative de la propriété, par exemple une valeur de tension à partir de laquelle on peut calculer une valeur d'impédance de la ligne électrique.

Ainsi, en recevant une valeur de mesure relative à une propriété de ligne électrique, on peut ne prévoir qu'une seule sonde par valeur de mesure reçue. En particulier, on pourra prévoir strictement deux sondes, ce qui peut permettre de conférer au système de mesure une conception relativement simple et peu onéreuse.

Bien entendu, on pourra prévoir plus de deux sondes.

Avantageusement et de façon non limitative, préalablement à la réception des valeurs de mesure, pour chacune des deux sondes, on peut prévoir de commander la circulation d'une onde électromagnétique, par exemple une onde haute fréquence, supérieure au MHz, dans la ligne électrique formée par la sonde et son environnement. Une mesure subséquente de la tension à un point d'attaque de la sonde peut permettre d'estimer l'impédance de cette ligne électrique, cette impédance étant fonction de l'environnement de la sonde et en particulier de la proportion immergée.

Avantageusement, lors de telles étapes de mesure, on peut mesurer deux valeurs de tension respectives.

Avantageusement, on estime la hauteur en procédant par itérations, par exemple par dichotomie(s), en particulier au cours de l'étape de traitement. En effet, la détermination directe de la hauteur à partir de deux valeurs de tension et une non-connaissance a priori de la permittivité peut être très complexe voire impossible.

Le procédé peut comprendre avantageusement une phase d'étalonnage, correspondant à une disposition des sondes telle que chacune des deux sondes a une partie immergée et une partie émergée. Au cours de cette phase d'étalonnage, on évalue une valeur de permittivité du fluide à partir de deux valeurs de mesure reçues à l'étape (a). Cette phase d'étalonnage peut notamment intervenir lors d'un remplissage du réservoir, lorsque la hauteur du fluide est relativement faible. Des itérations en jouant, à hauteur constante, sur la valeur de la permittivité du fluide peuvent permettre une estimation relativement précise de la permittivité et, par voie de conséquence, du calcul des hauteurs effectuées par la suite.

Par exemple, au cours de l'étape (a), on reçoit pour chaque sonde une valeur de tension mesurée, en particulier en début de remplissage du réservoir. A partir d'une valeur initiale de permittivité et de ces valeurs de tension mesurées, on calcule pour chaque sonde une hauteur de fluide correspondante en appliquant le procédé décrit dans le document FR 2,847,340. Si les deux valeurs de hauteur ainsi obtenues ne concordent pas, alors on choisit une autre valeur de permittivité et deux nouvelles valeurs de hauteur sont alors estimées, toujours selon le procédé décrit dans le document FR 2,847,340. On fait varier la valeur de permittivité, par dichotomies successives, jusqu'à obtenir deux valeurs de hauteur suffisamment proches. Lorsque les deux valeurs de hauteurs sont suffisamment proches, on stocke en mémoire la valeur de permittivité correspondant à cette dernière itération.

Cette valeur de permittivité sera utilisée par la suite pour estimer la hauteur du fluide. On peut, par exemple, prévoir que lors d'une phase de fonctionnement, une seule des deux valeurs mesurées est utilisée pour déterminée une estimation de la hauteur de fluide, à partir de la valeur de permittivité déterminée lors de la phase d'étalonnage. Aussi, il est possible qu'en phase de fonctionnement, une seule des deux sondes ait une partie immergée.

Alternativement, on peut prévoir d'utiliser les deux valeurs de mesures même en phase de fonctionnement.

Par exemple, le procédé peut comprendre avantageusement au cours de l'étape de traitement, lors de la phase de fonctionnement:

- une étape (b) d'estimation d'une valeur d'impédance pour chacune des sondes, à partir d'une valeur présumée de hauteur de fluide et/ou à partir d'une valeur présumée de permittivité du fluide, et
- une étape (c) d'estimation de deux valeurs de tension à partir respectivement des deux valeurs d'impédance estimées à l'étape (b),
- une étape (d) de comparaison des valeurs de tension estimées à l'étape (c) respectivement aux valeurs de tension mesurées à l'étape (a).

Cette étape (d) de comparaison peut, par exemple, consister à, pour chaque sonde, comparer une différence entre une tension estimée et la tension mesurée correspondante à un seuil. On pourrait aussi prévoir de comparer le ratio entre les tensions estimée et mesurée à un autre seuil, etc.

Avantageusement et de façon non limitative, si cette étape (d) montre que pour au moins une sonde, les valeurs estimées et mesurées de tension différent trop fortement, on assigne une nouvelle valeur à la hauteur présumée du fluide et/ou à la permittivité du fluide, et on répète les étapes (b), (c) et (d) jusqu'à obtenir une concordance relative entre les valeurs de tension mesurées et les valeurs de tension estimées à l'étape (c).

Avantageusement et de façon non limitative, la nouvelle valeur assignée à la hauteur présumée du fluide et/ou à la permittivité du fluide est fonction du résultat de la comparaison de l'étape (d). En effet, connaissant les lois de variations de la tension en fonction de la hauteur et/ou de la permittivité, on pourra choisir une nouvelle valeur de hauteur et/ou de permittivité plus élevée ou plus faible que la précédente selon que la tension correspondant à cette valeur précédente est plus élevée ou plus faible que la tension effectivement mesurée.

En procédant ainsi par dichotomies, on peut espérer converger relativement rapidement vers une solution acceptable, permettant ainsi d'économiser du temps de calcul et donc de l'énergie. Ceci peut être particulièrement intéressant dans la mesure où certaines normes imposent une durée de vie minimale de la source d'énergie (par exemple une pile), par exemple 3 ou 4 ans.

Les équations mises en oeuvre lors des étapes (b) et (c) peuvent être relativement complexes et délicates à inverser. De telles itérations successives peuvent ainsi permettre de déterminer la hauteur du fluide de façon relativement précise.

Bien entendu, l'invention n'est en rien limitée à une telle estimation par dichotomies, notamment en fonctionnement. Par exemple, on pourrait prévoir de déterminer directement la hauteur du fluide à partir d'une des deux valeurs mesurées, en utilisant la valeur de permittivité issue de l'étalonnage, ou bien encore à partir des deux valeurs mesurées.

Il est en outre proposé un dispositif de mesure de la hauteur du fluide contenu à l'intérieur d'un réservoir, comprenant :

- deux sondes présentant au moins une caractéristique physique différente, par exemple des longueurs différentes, et disposées l'une par rapport à l'autre de sorte qu'une fois installées à l'intérieur du réservoir de façon à définir une partie immergée dans le fluide et une partie émergée, et, des moyens de traitement agencés pour estimer une valeur de hauteur à partir de deux valeurs mesurées au moyen de ces deux sondes respectives.

Il est en outre proposé un dispositif de mesure de la hauteur du fluide contenu à l'intérieur d'un réservoir, comprenant

- deux sondes disposées dans le réservoir de sorte que pour au moins une hauteur de fluide, chaque sonde définisse une partie immergée dans le fluide et une partie émergée, et de sorte que, chaque sonde formant vis-à-vis de son environnement une ligne électrique correspondante, lesdites lignes électriques présentent au moins une caractéristique physique différente d'une ligne électrique à l'autre,
- des moyens de réception pour recevoir deux valeurs de mesure obtenues au moyen de ces sondes respectives, chaque valeur de mesure étant relative à une propriété de la ligne électrique correspondante, et
- des moyens de traitement agencés pour estimer une valeur de hauteur à partir de deux valeurs de mesure reçues.

Par exemple, ces deux sondes peuvent être disposées avec leurs extrémités distales sensiblement à la même hauteur. Ainsi, quel que soit le niveau de fluide dans le réservoir, les proportions relatives entre la longueur de la partie immergée et la longueur de la partie émergée sont forcément différentes d'une sonde à l'autre.

Les moyens de réception peuvent avantageusement être agencés pour (a) recevoir une valeur de tension mesurée à un point d'attaque de la sonde,

Les moyens de traitement peuvent avantageusement être agencés pour, pour chaque sonde :

- (e) assigner une valeur présumée à une variable de hauteur de fluide,
- (b) estimer une valeur d'impédance à partir de la valeur présumée de hauteur de fluide, et
- (c) estimer une valeur de tension à partir de la valeur d'impédance correspondante estimée à l'étape (b),

Les moyens de traitement peuvent être agencés pour :

- (d) comparer les valeurs de tension estimées à l'étape (c) respectivement aux valeurs de tension mesurées à l'étape (a),
- en fonction du résultat de la comparaison, répéter l'étape (e) en assignant une nouvelle valeur à la variable de hauteur de fluide, puis réitérer les étapes (b) et (c) et (d).

Les moyens de traitement peuvent être agencés de façon à évaluer une valeur de permittivité du fluide, lors d'une étape d'étalonnage. Cette valeur de permittivité évaluée peut être utilisée dans les calculs ultérieurs d'estimation de la hauteur.

Ce dispositif peut ainsi permettre de mettre en oeuvre le procédé décrit plus haut.

Les moyens de traitement peuvent être intégrés dans ou comprendre un ou plusieurs processeurs. Les moyens de réception peuvent, par exemple, comprendre deux pins d'entrée, un port d'entrée, ou autre.

Par exemple, le dispositif de mesure peut avantageusement comprendre

- Les moyens de traitement décrits plus haut, par exemple un premier processeur, pour exécuter les étapes (a) à (e). Ces moyens de traitement peuvent être, être intégrés dans ou comprendre par exemple un microcontrôleur, un microprocesseur, un DSP (de l'anglais « Digital Signal Processor »), ou autre.
- Des moyens de traitement distincts ou supplémentaires, par exemple un deuxième processeur, pour commander la circulation d'une onde haute fréquence à l'intérieur des de chaque sonde et recueillir des valeurs correspondant à des tensions mesurées. Ces moyens de traitement distincts de ceux décrits plus haut peuvent être intégrés dans ou comprendre par exemple un microcontrôleur, un ASIC (de l'anglais « Application-Specific Integrated Circuit »), un FPGA (de l'anglais « Field Programmable Gate Array »), être réalisés en éléments discrets, ou autre.

Les premier et deuxième processeurs, et d'une façon générale, les moyens de traitement et les moyens de traitement supplémentaires, peuvent être éloignés l'un de l'autre, par exemple d'au moins trois mètres, pour maintenir une distance entre le carburant inflammable et la partie supportant la source d'énergie afin de respecter les spécifications techniques de l'application.

Le dispositif de mesure peut avantageusement comprendre un afficheur.

Le dispositif de mesure peut avantageusement comprendre un émetteur par exemple radio fréquence compatible avec un récepteur idoine placé à distance servant au déport d'une information relative à un volume présent de liquide à l'intérieur du réservoir. Avantageusement, ces informations peuvent ensuite être relayées par radiofréquence, GPRS, RTC ou autre, afin d'être traitées et utilisées par exemple pour une gestion des stocks.

Le dispositif de mesure peut avantageusement comprendre une alarme.

L'une des deux sondes peut être de 60% ou davantage plus longue que l'autre. Un tel écart de longueurs peut permettre d'estimer la hauteur de fluide avec une précision accrue.

L'invention peut trouver un exemple d'application dans le suivi du niveau de carburant de citernes, enterrées ou non, pour une consommation domestique ou bien encore pour stocker du GPL en station-service. L'invention peut trouver un autre exemple d'application dans le suivi du niveau de fuel de cuves pour l'alimentation de groupes électrogènes, notamment pour alimenter des relais radio d'un réseau de téléphonie du type GSM, par exemple en milieu désertique. L'invention peut trouver un autre exemple d'application outre la mesure de hauteur, par le suivi de la qualité du fluide servant à l'emplissage d'un réservoir du fait de la connaissance de la permittivité dudit fluide.

De manière générale, l'invention n'est pas limitée à une application particulière.

Description des figures.

D'autres caractéristiques et avantages de la présente invention apparaîtront à la lecture de la description qui va en être faite d'exemples de réalisation, en relation avec les figures annexées, dans lesquelles ;

- la figure 1 est une vue schématique en coupe d'un réservoir équipé d'un dispositif de mesure d'une hauteur d'un liquide contenu à l'intérieur du réservoir,
- la figure 2 est un organigramme d'un exemple de procédé selon un mode de réalisation de l'invention.

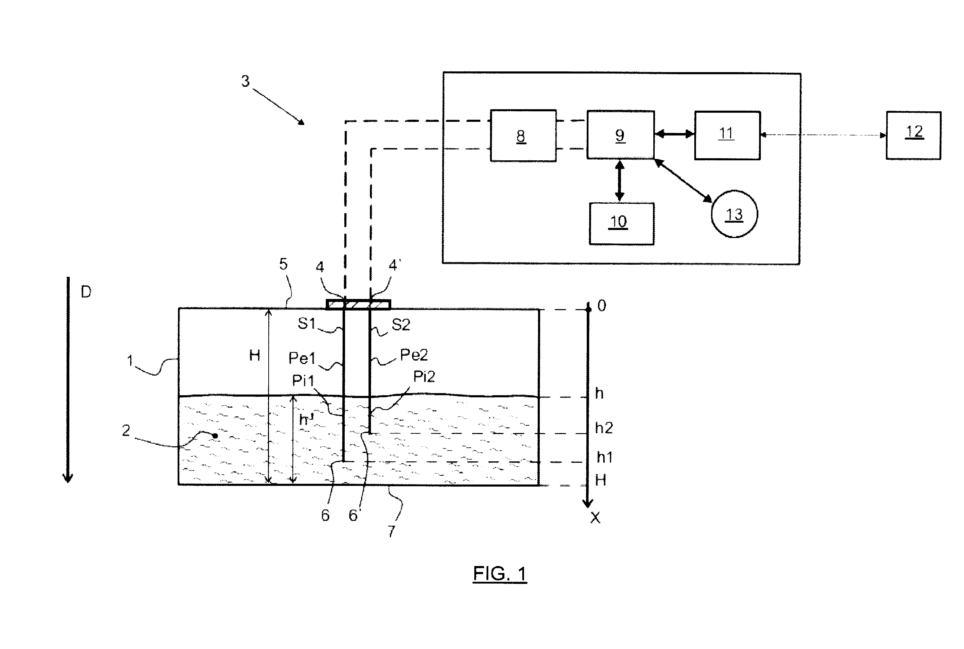

Sur la figure 1, un réservoir 1 est destiné à stocker un liquide 2, tel qu'un gaz de pétrole liquéfié ou analogue.

Le réservoir 1 est par exemple une citerne enterrée ou non. Le réservoir 1 est d'une hauteur maximale H qui est prise selon une direction D parallèle à celle de la gravité locale. Autrement dit, la hauteur H est la hauteur maximale de liquide que peut contenir le réservoir 1 en position d'utilisation du réservoir 1. Autrement dit encore, une hauteur h' de liquide 2 à l'intérieur du réservoir 1 varie entre zéro, lorsque le réservoir 1 est vide, et H lorsque le réservoir 1 est plein. Le réservoir 1 est d'une géométrie connue, notamment cylindrique, de telle sorte qu'il est aisé de déterminer par calcul un volume de liquide 2 contenu à l'intérieur du réservoir 1 à partir de la hauteur h'.

Le réservoir 1 est équipé d'un dispositif de mesure 3 de la hauteur h' de liquide 2 contenu à l'intérieur du réservoir 1. Le dispositif de mesure 3 comprend deux sondes S1, S2. Chaque sonde S1, S2 est indifféremment une ligne coaxiale ou non, qui est apte à transmettre une onde d'une fréquence de l'ordre de quelques MHz, par exemple 4 MHz. Une première sonde S1 est d'une longueur $h_1$ tandis qu'une deuxième sonde S2 est d'une longueur $h_2$, avec $h_1$ strictement supérieur à $h_2$. Les sondes S1, S2 sont rectilignes et disposées, de manière préférentielle, parallèlement l'une à l'autre à l'intérieur du réservoir 1. Les sondes S1, S2 comprennent chacune une extrémité proximale respective 4, 4' qui est en relation avec une paroi supérieure 5 du réservoir 1. Plus particulièrement, les extrémités proximales 4, 4' sont disposées à une même hauteur à l'intérieur du réservoir 1. Les sondes S1, S2 comprennent chacune une extrémité distale respective 6, 6' qui est dirigée vers une paroi inférieure 7 du réservoir 1. La paroi inférieure 7 est la paroi opposée à et disposée en vis-à-vis de la paroi supérieure 5.

Chaque sonde S1, S2 comporte respectivement une partie immergée Pi1,Pi2 dans le liquide 2 et une partie émergée Pe1,Pe2 hors du liquide 2. En se référant à un axe vertical OX comportant une origine O placée aux extrémités proximales 4,4' des sondes $S_1,S_2$, la première sonde S1 comporte une première partie émergée Pe1 de longueur h et une première partie immergée Pi1 ayant une longueur $h_1$-h. Autrement dit, la première sonde S1 comporte une première proportion émergée $x_1$ qui vaut $h/h_1$ et une première proportion immergée $(1-x_1)$ qui vaut $(h_1-h)/h_1$. De même, la deuxième sonde S2 comporte une deuxième partie émergée Pe2 de longueur h et une deuxième partie immergée Pi2 ayant une longueur $h_2$-h. Autrement dit, la deuxième sonde S2 comporte une deuxième proportion émergée $x_2$ qui vaut $h/h_2$ et une deuxième proportion immergée $(1-x_2)$ qui vaut $(h_2-h)/h_2$.

Le dispositif de mesure 3 comprend également une unité ASIC 8 apte à faire circuler une onde haute fréquence, de l'ordre de quelques MHz dans les sondes $S_1,S_2$. On peut prévoir d'envoyer des ondes de même fréquence sur l'une et l'autre sonde, ou bien de fréquences différentes.

Le dispositif de mesure 3 comprend aussi un calculateur 9 à même d'effectuer des opérations itératives notamment basées sur les relations [1], [2], [3] décrites ci-dessous. Le calculateur 9 est par exemple du type micro-contrôleur, voire un microprocesseur du genre DSP. Le calculateur 9 est préférentiellement disposé à une distance supérieure à au moins trois mètres de l'unité ASIC 8 pour éviter tout risque d'inflammabilité du liquide 2.

Avant que le réservoir 1 ne soit rempli de fluide, lorsque la hauteur du fluide dans le réservoir est relativement faible mais que chaque sonde a une partie immergée, le calculateur 9 effectue un étalonnage pour évaluer une valeur de permittivité du fluide contenu dans le réservoir 1. Par exemple, deux valeurs de tension sont reçues de l'ASIC 8, et une valeur initiale est affectée à la permittivité. Cette valeur initiale peut par exemple être lue dans une mémoire, dans laquelle elle a été stockée lors de la fabrication du dispositif, ou bien encore après un précédent cycle de mesures, de façon à être associée à une nature supposée du fluide. Pour chaque sonde, on calcule une valeur de hauteur en mettant en oeuvre le procédé décrit dans le document FR 2,847,340, à partir de la valeur de mesure correspondante et de la valeur de permittivité initiale. Si les deux valeurs de hauteur ainsi calculées diffèrent trop l'une de l'autre, on affecte une nouvelle valeur à la permittivité et on réitère les calculs des valeurs de hauteurs. Ces calculs seront en fait répétés tant que les deux valeurs de hauteurs ne concordent pas. Chaque nouvelle valeur de permittivité est choisie de façon dichotomique, par éliminations successives de plages d'intervalles. Si à une itération donnée, les deux valeurs de hauteur correspondant aux deux valeurs mesurées sont suffisamment proches, alors on considère que la permittivité du fluide est égale à la valeur de permittivité assignée lors de cette itération. Cette valeur de permittivité est stockée en mémoire.

Une fois le réservoir rempli, les sondes permettent une estimation de la hauteur du fluide au fur et à mesure que celle-ci diminue du fait de l'utilisation du fluide.

Dans un mode de réalisation non illustré, on peut prévoir qu'une fois l'étalonnage effectué, en fonctionnement, deux valeurs de tension issues des deux sondes respectives soient reçues, mais qu'une seule de ces deux valeurs soit utilisée pour estimer, en se basant en outre sur la valeur de permittivité estimée lors de l'étalonnage, une valeur de hauteur.

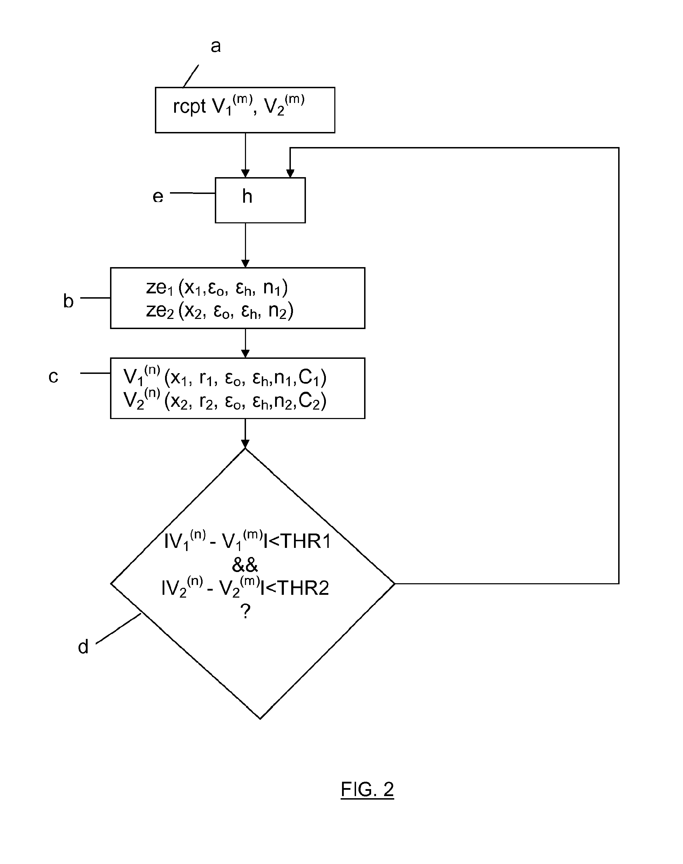

Dans un mode de réalisation préféré, en fonctionnement, en référence à la figure 2, le calculateur reçoit lors d'une étape a, des valeurs en provenance de l'ASIC 8. Ces valeurs sont normalisées au sein de l'ASIC ou bien du calculateur, lors d'une étape non représentée, en appliquant la formule suivante : $V_i^{(m)} = \dfrac{V_i^{mes} - V_i^{vide}}{V_i^{plein} - V_i^{vide}}$ Où

$V_i^{mes}$ est la tension mesurée au point d'attaque de la sonde i, $V_i^{vide}$ est la tension lorsque le réservoir est vide, préalablement mesurée au point d'attaque de la sonde i et gardée en mémoire, et $V_i^{plein}$ la tension lorsque la sonde i est totalement immergée, préalablement mesurée et gardée en mémoire.

Lors d'une étape e, une valeur est assignée à la hauteur h. On pourra par exemple choisir une valeur de hauteur h conservée en mémoire et incrémentée, afin de limiter les itérations à venir, ou bien une valeur choisie égale à H/2.

Lors d'une étape b, le calculateur estime deux valeurs $ze_1$, $ze_2$ à partir de la valeur assignée à l'étape e et en utilisant la formule (1) ci-dessous. L'impédance réduite $ze_i(x_i, \varepsilon_0, \varepsilon_h, n_i)$ d'une telle sonde Si, ou i=1 ou 2, est donnée par :

$$ze_i = j \frac{\sqrt{\frac{\varepsilon_0}{\varepsilon_h}\tan(2\pi\frac{1-x_i}{n_i}\sqrt{\varepsilon_h}).\tan(2\pi\frac{x_i}{n_i}\sqrt{\varepsilon_0})-1}}{\sqrt{\frac{\varepsilon_0}{\varepsilon_h}}.\tan(2\pi\frac{x_i}{n_i}\sqrt{\varepsilon_0})+\tan(2\pi\frac{1-x_i}{n_i}\sqrt{\varepsilon_h})} \qquad [1]$$

Dans laquelle :

- $\varepsilon_0$ est la permittivité de l'air,
- $\varepsilon_h$ est la permittivité du liquide 2, évaluée lors de l'étape préalable d'étalonnage,
- pour chaque sonde indicée i, $x_i$ est la proportion émergée de la sonde,
- pour chaque sonde indicée i, $n_i$ est un ratio entre la longueur de la tige de la sonde S1, S2 et la longueur d'onde correspondant à l'onde électrique dans le vide transmise sur cette sonde.

Puis, lors d'une étape c, le calculateur estime deux valeurs de tension normalisées $V_1^{(n)}$, $V_2^{(n)}$ en appliquant les formules (2) et (3) décrites ci-dessous.

A partir des impédances $ze_i(x_0, \varepsilon_0, \varepsilon_h, n_i)$, on obtient pour chaque sonde une tension $V_i(x_i, r_i, \varepsilon_0, \varepsilon_h, n_i, C_i)$, à partir de la formule [2] ci-dessous :

$$Vi = \frac{\left|\dfrac{1}{\dfrac{1}{ze_i}+j.C_i.2\pi F}\right|}{\left|r_i+\dfrac{1}{\dfrac{1}{ze_i}+j.C_i.2\pi F}\right|} \qquad [2]$$

Dans laquelle :

- pour chaque sonde, $C_i$ est une valeur de capacité parasite de la sonde, en Farad ;
- F est la fréquence de l'onde portée par les sondes $S_1, S_2$, en Hertz ;
- Pour chaque sonde, $r_i$ est un ratio sans dimension de la résistance réelle servant à l'injection du signal et de l'impédance caractéristique de la sonde.

Puis, les valeurs de tension sont normalisées à partir de la relation [3] ci-dessous :

$$V_i^{(n)} = \frac{Vi(x_i, r_i, \varepsilon 1, \varepsilon h, n_i, C_i) - Vi(1, r_i, \varepsilon 1, \varepsilon h, n_i, C_i)}{Vi(0, r_i, \varepsilon 1, \varepsilon h, n_i, C_i) - Vi(1, r_i, \varepsilon 1, \varepsilon h, n_i, C_i)} \qquad [3]$$

Ces valeurs normalisées $V_1^{(n)}$, $V_2^{(n)}$ sont comparées aux valeurs normalisées $V_1^{(m)}$, $V_2^{(m)}$ issues de l'ASIC lors d'une étape d.

Tant que les valeurs estimées $V_1^{(n)}$, $V_2^{(n)}$ s'écartent trop des valeurs mesurées $V_1^{(m)}$, $V_2^{(m)}$, l'hypothèse réalisée sur la hauteur à l'étape e est considérée comme non-correcte, et les étapes e, b, c et d sont répétées.

Cet organigramme est relativement simplifié en ce sens qu'on pourrait préciser davantage comment on modifie la hauteur à chaque itération.

Dans un mode de réalisation, on peut par exemple prévoir de modifier la hauteur jusqu'à ce que la somme S des différences entre les tensions mesurées et estimées passe en-dessous d'un seuil. S est définie comme :

$$S = \left| V_1^{(n)} - V_1^{(m)} \right| + \left| V_2^{(n)} - V_2^{(m)} \right|$$

Si lors d'une itération donnée, la somme S est supérieure au seuil choisi, alors on considère le signe de la différence $V_1^{(n)}$-$V_1^{(m)}$ et/ou le signe de la différence $V_2^{(n)}$-$V_2^{(m)}$. Lors de l'itération suivante, on choisira une nouvelle valeur de hauteur en fonction de ce signe. Si ces différences sont de signes opposés, alors on peut prévoir de déclencher un nouvel étalonnage.

Par exemple, lors de la première itération, la hauteur présumée est choisie égale à H/2. Selon que les valeurs de tension correspondantes sont au-dessus ou en-dessous des valeurs de tension mesurées, on choisira à la prochaine itération une valeur de hauteur présumée égale à $\dfrac{H}{4}$ ou à $\dfrac{3}{4}$ $H$. La convergence est ainsi relativement rapide.

Ces itérations successives permettent ainsi une estimation de la hauteur h', et donc de la hauteur h.

Il en résulte finalement une faculté procurée par la présente méthode qui est de permettre de calculer la hauteur h'=H-h d'un fluide contenu à l'intérieur d'un réservoir 1, en s'affranchissant de la connaissance a priori d'une permittivité du fluide 2. Une telle faculté est particulièrement intéressante dans le cas fréquent où le fluide est constitué d'un mélange de plusieurs composés en proportions précises inconnues.

Par ailleurs, pour revenir à la figure 1, le dispositif de mesure 3 comprend par exemple un afficheur 10 pour mettre à la disposition d'un utilisateur une valeur calculée d'un volume présent de liquide 2 à l'intérieur du réservoir 1. A cet effet, le calculateur 9 comprend des moyens pour calculer le volume présent de liquide 2 contenu à l'intérieur du réservoir 1 à partir de la hauteur h précédemment calculée et de la connaissance de la forme de celui ci.

Accessoirement, le dispositif de mesure 3 comprend un émetteur 11 compatible avec un récepteur à distance 12 d'une information relative au volume présent de liquide 2 à l'intérieur du réservoir 1. L'émetteur 11 et le récepteur 12 sont indifféremment filaire ou non-filaire, par exemple du type radio, infrarouge ou autre.

Enfin, le dispositif de mesure 3 comprend une alarme 13 pouvant signifier à un utilisateur un volume présent de liquide 2 contenu à l'intérieur du réservoir 1 qui est inférieur à un volume-seuil et/ou signaler un défaut de fonctionnement, détecté par un résultat de calcul (alimentation faible, défaut de sonde, excitation défaillante etc.). L'alarme est indifféremment une alarme sonore et/ou une alarme visuelle.

Ces différents modules 8, 9, 10, 11 et/ou 13, sont alimentés en énergie par une ou plusieurs pile(s) non représentée(s).

Le fluide 2 peut être issu du raffinage et/ou être un mélange de différents composés, tels que du butane et du propane par exemple. Plus généralement, le fluide 2 peut être liquide ou pulvérulent.

## Revendications

**1.** Procédé de mesure d'une hauteur d'un fluide (2) contenu à l'intérieur d'un réservoir (1), comprenant prévoir deux sondes (S1, S2) disposées dans le réservoir de sorte que pour au moins une hauteur de fluide, chaque sonde définisse une partie immergée dans le fluide et une partie émergée, et de sorte que, chaque sonde formant vis-à-vis de son environnement une ligne électrique correspondante, lesdites lignes électriques présentent au moins une caractéristique physique différente d'une ligne électrique à l'autre, une étape (a) de réception de deux valeurs de mesures obtenues au moyen desdites sondes respectives, chaque valeur de mesure reçue étant relative à une propriété de la ligne électrique correspondante, et

une étape de traitement pour estimer une valeur de hauteur de fluide à partir des deux valeurs de mesures reçues à l'étape (a).

2. Procédé selon la revendication 1, dans lequel les deux sondes ont des longueurs différentes ($h_1$, $h_2$), et dans lequel les proportions relatives ($x_1$, $x_2$) entre la longueur de la partie immergée et la longueur de la partie émergée sont différentes d'une sonde à l'autre.

3. Procédé selon l'une des revendications 1 à 2, dans lequel, au cours de l'étape (a), chaque valeur de mesure reçue est relative à une impédance de la ligne électrique correspondante.

4. Procédé selon la revendication 3, comprenant, préalablement à la réception des valeurs de mesure, pour chacune des deux sondes, commander la circulation d'une onde électromagnétique dans la sonde.

5. Procédé selon l'une des revendications 1 à 4, dans lequel,
au cours d'une phase d'étalonnage, on estime une valeur de permittivité à partir de deux valeurs de mesures reçues à l'étape (a), et
en fonctionnement, on utilise la valeur de permittivité estimée ainsi qu'au moins une valeur de mesure reçue pour estimer la valeur de hauteur.

6. Procédé selon l'une des revendications 1 à 5, **caractérisé en ce qu'au** cours de l'étape (a), on reçoit pour chaque sonde une valeur de tension ($V_1^{(m)}$, $V_2^{(m)}$.

7. Procédé selon l'une des revendications 1 à 6, dans lequel, au cours de l'étape de traitement, on procède par dichotomies pour estimer la valeur de hauteur (h).

8. Procédé selon la revendication 7 lorsqu'elle dépend de la 6, dans lequel, au cours de l'étape de traitement :

- on estime une valeur d'impédance (ze1, ze2) pour chacune des sondes, à partir d'une valeur présumée de hauteur de fluide,
- on estime deux valeurs de tension ($V_1^{(n)}$, $V_2^{(n)}$) à partir respectivement des deux valeurs d'impédance estimées,
- on compare les valeurs de tension estimées respectivement aux valeurs de tension mesurées reçues à l'étape (a),
- si la comparaison montre que pour au moins une sonde, les valeurs estimées et mesurées de tension diffèrent trop fortement, on assigne une nouvelle valeur à la hauteur présumée du fluide, et on répète l'estimation d'impédance, l'estimation de tension et la comparaison jusqu'à obtenir une concordance relative entre les valeurs de tension mesurées et les valeurs de tension estimées.

9. Dispositif de mesure (3) de la hauteur du fluide (2) contenu à l'intérieur d'un réservoir (1), comprenant
deux sondes (S1, S2) disposées dans le réservoir de sorte que pour au moins une hauteur de fluide, chaque sonde définisse une partie immergée dans le fluide et une partie émergée, et de sorte que, chaque sonde formant vis-à-vis de son environnement une ligne électrique correspondante, lesdites lignes électriques présentent au moins une caractéristique physique différente d'une ligne électrique à l'autre,
des moyens de réception pour recevoir deux valeurs de mesure issues desdites sondes respectives, chaque valeur de mesure étant relative à une propriété de la ligne électrique correspondante, et
des moyens de traitement (9) agencés pour estimer une valeur de hauteur à partir de deux valeurs de mesure reçues.

10. Dispositif de mesure (3) selon la revendication 9,
dans lequel
les moyens de réception sont aptes à, pour chaque sonde, recevoir une valeur mesurée de tension à un point d'attaque de la sonde,
et dans lequel
les moyens de traitement (9) sont agencés pour:

- assigner une valeur présumée à une variable de hauteur de fluide,
- pour chaque sonde, estimer une valeur d'impédance à partir de la valeur présumée de hauteur de fluide et de la valeur mesurée correspondant à ladite sonde, et
- pour chaque sonde, estimer une valeur de tension à partir de la valeur d'impédance correspondante estimée,

- comparer les valeurs de tension estimées respectivement aux valeurs de tension mesurées,
- en fonction du résultat de la comparaison, assigner une nouvelle valeur à la variable de hauteur de fluide, puis réitérer les étapes d'estimations et de comparaison.

**11.** Dispositif de mesure (3) selon l'une quelconque des revendications 9 à 10, **caractérisé en ce que** le dispositif de mesure (3) comprend des moyens de traitement supplémentaires (8) aptes à commander la circulation d'une onde haute fréquence à l'intérieur de chaque sonde et recueillir des valeurs correspondant à des tensions mesurées.

**12.** Dispositif de mesure (3) selon l'une quelconque des revendications 9 à 11, **caractérisé en ce que** les moyens de traitement (9) et les moyens de traitement supplémentaires (8) sont distants d'au moins trois mètres.

**13.** Dispositif de mesure (3) selon l'une quelconque des revendications 9 à 12, **caractérisé en ce que** le dispositif de mesure (3) comprend un émetteur (11) compatible avec un récepteur à distance (12) d'une information relative à un volume présent de liquide (2) à l'intérieur du réservoir (1).

FIG. 1

FIG. 2

Europäisches
Patentamt

European
Patent Office

Office européen
des brevets

**RAPPORT DE RECHERCHE EUROPEENNE**

Numéro de la demande

EP 12 19 1841

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/093943 A1 (ARIAS HERMAN DIAZ [MX]) 20 mai 2004 (2004-05-20) | 1-6,9, 12,13 | INV. G01F23/24 |
| Y | * alinéas [0004] - [0009], [0042] - [0043] * <br> * alinéas [0018] - [0023] * <br> * alinéas [0038], [0042] - [0043] * <br> * figures 1-6 * <br> ----- | 7,8,10, 11 | |
| X | US 4 382 382 A (WANG JISH M) 10 mai 1983 (1983-05-10) <br> * colonne 4, ligne 9-57 * <br> * colonne 7, ligne 65; figures 1-12 * <br> ----- | 1-4,6,9 | |
| Y | WO 2009/089339 A2 (DIRACTION LLC [US]; DRACK EARLE DAVID [US]) 16 juillet 2009 (2009-07-16) <br> * page 13, ligne 6 - page 14, ligne 2 * <br> * page 17, ligne 3-10 * <br> * page 19, ligne 17 - page 20, ligne 14 * <br> ----- | 7,8,10 | |
| Y | FR 2 847 340 A1 (MORINEAU JACQUES [FR]; SIMONNY ROGER [FR]) 21 mai 2004 (2004-05-21) <br> * page 2, ligne 25-26 * <br> ----- | 11 | **DOMAINES TECHNIQUES RECHERCHES (IPC)** <br><br> G01F |

Le présent rapport a été établi pour toutes les revendications

| Lieu de la recherche | Date d'achèvement de la recherche | Examinateur |
|---|---|---|
| Munich | 25 février 2013 | Roetsch, Patrice |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

  & : membre de la même famille, document correspondant

EPO FORM 1503 03.82 (P04C02)

**EP 2 592 396 A1**

**ANNEXE AU RAPPORT DE RECHERCHE EUROPEENNE
RELATIF A LA DEMANDE DE BREVET EUROPEEN NO.**

EP 12 19 1841

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-02-2013

| Document brevet cité au rapport de recherche | Date de publication | Membre(s) de la famille de brevet(s) | Date de publication |
|---|---|---|---|
| US 2004093943 A1 | 20-05-2004 | MX  PA03010425 A<br>US  2004093943 A1 | 15-10-2004<br>20-05-2004 |
| US 4382382 A | 10-05-1983 | AUCUN | |
| WO 2009089339 A2 | 16-07-2009 | EP    2238440 A2<br>US  2010295565 A1<br>WO  2009089339 A2 | 13-10-2010<br>25-11-2010<br>16-07-2009 |
| FR 2847340 A1 | 21-05-2004 | AU  2003290203 A1<br>FR    2847340 A1<br>US  2006096368 A1<br>WO  2004046662 A1 | 15-06-2004<br>21-05-2004<br>11-05-2006<br>03-06-2004 |

EPO FORM P0460

**EP 2 592 396 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2847340, MORINEAU Jacques et SIMONNY Roger